# EUROPEAN PATENT SPECIFICATION

(11) **EP 2 309 808 B1**
(45) Date of publication and mention of the grant of the patent: **03.07.2013**
(21) Application number: 10173790.6
(22) Date of filing: 24.08.2010
(51) Int. Cl.: H04W 60/00, H04W 84/04

(54) **Providing service using relay node in 3rd generation partnership project (3gpp) long term evolution (lte)-advanced system**
Bereitstellung eines Dienstes unter Verwendung eines Relaisknotens in einem verbesserten Partnerschaftsprojektsystem der dritten Generation mit langfristiger Entwicklung (3gpp)
Fournir un service à l'aide d'un noeud de relais dans un système avancé à évolution sur le long terme pour projet de partenariat de 3ème génération (3gpp)

(30) Priority: 12.10.2009 KR 20090096562
(43) Date of publication of application: 13.04.2011
(73) Proprietor: Electronics and Telecommunications Research Institute, Daejeon 305-700 (KR)
(72) Inventor: Kang, Sook Yang, 305-700, Daejeon (KR); Lim, Soon Yong, 305-700, Daejeon (KR); Park, Aesoon, 305-700, Daejeon (KR); Yang, Mi Jeong, 305-700, Daejeon (KR)
(74) Representative: Betten & Resch

(56) References cited:
- WO-A1-2008/125729
- US-A1- 2009 197 603
- RAPPORTEUR (ERICSSON): "TP to TR 36.806", 3GPP DRAFT; R3-092465, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, [Online] 2 October 2009 (2009-10-02), pages 1-22, XP050391973, Retrieved from the Internet: URL:http://www.3gpp1.org/ftp/Specs/html-in fo/TDocExMtg--R3-65b--27587.htm> [retrieved on 2009-10-03]
- "3rd Generation Partnership Project;Technical Specification Group Radio Access Network;Evolved Universal Terrestrial Radio Access (E-UTRA);Relay architectures for E-UTRA (LTE-Advanced)(Release 9)", 3GPP DRAFT; R2-095391 TR 36.806 V0.1.0 ON RELAY ARCHITECTURES FOR E-UTRA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 1 September 2009 (2009-09-01), XP050389991, [retrieved on 2009-10-16]
- CMCC: "Discussions on Functionality Partition of Relay in RAN2", 3GPP DRAFT; R2-092407 DISCUSSION ON FUNCTIONALITY PARTITION OF RELAY IN RAN2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090317, 17 March 2009 (2009-03-17), XP050340127, [retrieved on 2009-03-17]
- CATT: "L3 Anchor Carrier", 3GPP DRAFT; R2-094322, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090818, 18 August 2009 (2009-08-18), XP050352561, [retrieved on 2009-08-18]
- ERICSSON (RAPPORTEUR): "TP to 36.912 on Relaying", 3GPP DRAFT; R3-091995, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090820, 20 August 2009 (2009-08-20), XP050353339, [retrieved on 2009-08-20]
- TEXAS INSTRUMENTS: "On the design of relay node for LTE-advanced", 3GPP DRAFT; R1-090593, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050318480, [retrieved on 2009-02-03]
- NOKIA SIEMENS NETWORKS (RAPPORTEUR): "TP to 36.912 on Relays and Carrier Aggregation", 3GPP DRAFT; R2-094083 TP 36912 ON RELAYS AND CA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090715, 15 July 2009 (2009-07-15), XP050352223, [retrieved on 2009-07-15]

## Description

### 1. Field of the Invention

Embodiments of the present invention relate to a method and system of providing a service using a relay node in a 3^{rd} Generation Partnership Project (3GPP) Long Term Evolution (LTE)-Advanced system, and more particularly, to a method and system of providing a service that is optimized with respect to a small cell managed by a relay node by adding a function of a base station to the relay node.

### 2. Description of the Related Art

In a mobile communication system, a relay node is installed in a shadow area that may not be covered by a base station, and is used to expand a service coverage when data is transmitted at a high rate, and to support a group mobility.

However, a conventional relay node includes only a function of relaying an information transmission and reception between a base station and a terminal. Accordingly, a private network such as a wireless local area network (WLAN) is operated to provide a service optimized with respect to a corresponding area,

Since the private network includes a narrow coverage, a plurality of access points may need to be installed, which may increase costs.

Accordingly, there is a need for a method and system for providing a service optimized with respect to a small area using a relay node having an appropriate size of a coverage.

Document "CMCC: Discussions on Functionality Partition of Relay in RAN2; R2-092407; 17-03-2009" discloses a Relay Node and how the functionality to be carried out is splitted between said node and an eNB. Document "CATT: L3 Anchor Carrier, R2-094322; 18-08-2009" teaches the use of carrier aggregation.

### SUMMARY

The object of the invention is solved by the independent claims 1 and 4.

An example useful to understand the invention provides a method and system for providing a service using a relay node that enables a relay node to operate as a base station by adding a layer 3 (L3) protocol to the relay node.

Another example also provides a method and system for providing a service using a relay node that enables a relay node to connect a core network and a server of providing a service optimized with respect to a particular location or area, and thereby may provide a user with a separate service available only in an area managed by the relay node.

Another example also provides a method and system for providing a service using a relay node that may perform a handover of a channel used by a base station from the base station to a relay node and thereby may decrease a number of targets connected by a terminal, when the terminal includes a carrier aggregation function and utilizes different services in the base station and the relay node.

According to another example, there is provided a system for providing a service using a relay node, including the relay node including a layer 1 (L1) protocol and a layer 1 (L2) protocol to manage an information transmission and reception between a base station and a terminal in a particular area, and to relay the information transmission and reception between the base station and the terminal, and an L3 protocol to connect a control signal of a user transmitted from the terminal to a server without using the base station.

According to another example, there is provided a method of providing a service using a relay node, the method including: verifying, by the relay node, context information associated with a terminal entering a particular area; transmitting, by the relay node, system information to the terminal when context information associated with the terminal does not exist; transmitting, by the relay node, a service registration request and location information of the terminal to a CGMME (Closed Group Mobility Management Entity) when the relay node receives the service registration request from the terminal as a response to the system information; and relaying, by the relay node, an information transmission between the CGMME and the terminal to provide the terminal with a service optimized with respect to the particular area that is performed by the CGMME, when the CGMME completes a radio access setup according to the service registration request.

### EFFECT

According to examples useful to understand the invention, it is possible to enable a relay node to operate as a base station by adding a layer 3 (L3) protocol to the relay node.

Also, according to other example, it is possible to enable a relay node to connect a CGMME and a server of providing a service optimized with respect to a particular location or area, and to thereby provide a user with a separate service available only in an area managed by the relay node.

Also, according to other example, it is possible to perform a handover of a channel used by a base station from the base station to a relay node and to thereby decrease a number of targets connected by a terminal, when the terminal includes a carrier aggregation function and utilizes different services in the base station and the relay node.

### BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:
FIG. 1 is a diagram illustrating an example of a system for providing a services using a relay node according to a related art;
FIG. 2 is a diagram illustrating an example of a system for providing a service using a relay node according to an embodiment of the present invention;
FIG. 3 is a flowchart illustrating a method of providing a service using a relay node according to an embodiment of the present invention; and
FIG. 4 is a flowchart illustrating a method of performing a handover of a communication service according to an embodiment of the present invention.

### DETAILED DESCRIPTION

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

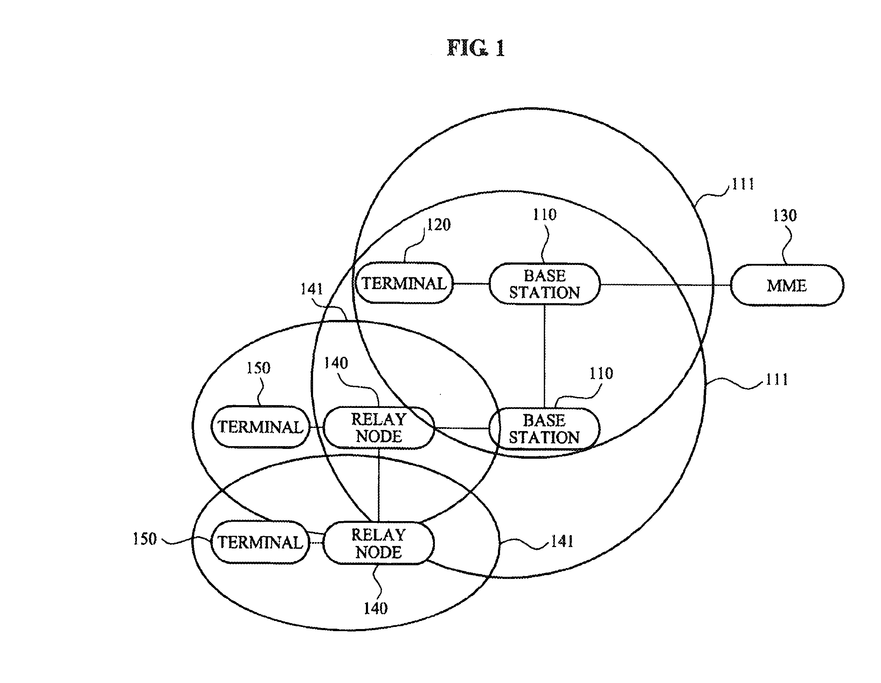

FIG. 1 is a diagram illustrating an example of a system for providing a service using a relay node 140.

Referring to FIG. 1, the service providing system using the relay node 140 may include a base station 110, terminal 120 and 150, a MME (Mobility Management Entity) 130 and the relay node 140.

The base station 110 may transmit and receive information to and from the MME 130 performing a communication service, and the terminal, 120 that is included in a donor cell 111 of a predetermined coverage. The base station 110 may provide the performed communication service to the terminal 120.

The relay node 140 may relay an information transmission and reception between the base station 110 and the terminal 150 that is located in a particular area 141 where it is difficult for the base station 110 to directly provide the communication service, and thereby may provide the communication service to the terminal 150.

The particular area 141 may be, for example, an outer area of the donor cell 111, a hot spot area, and a closed group that is an inside area of a building and a particular location at which it is difficult to receive a signal transmitted from the base station 110 due to a structure or a size of a surrounding building.

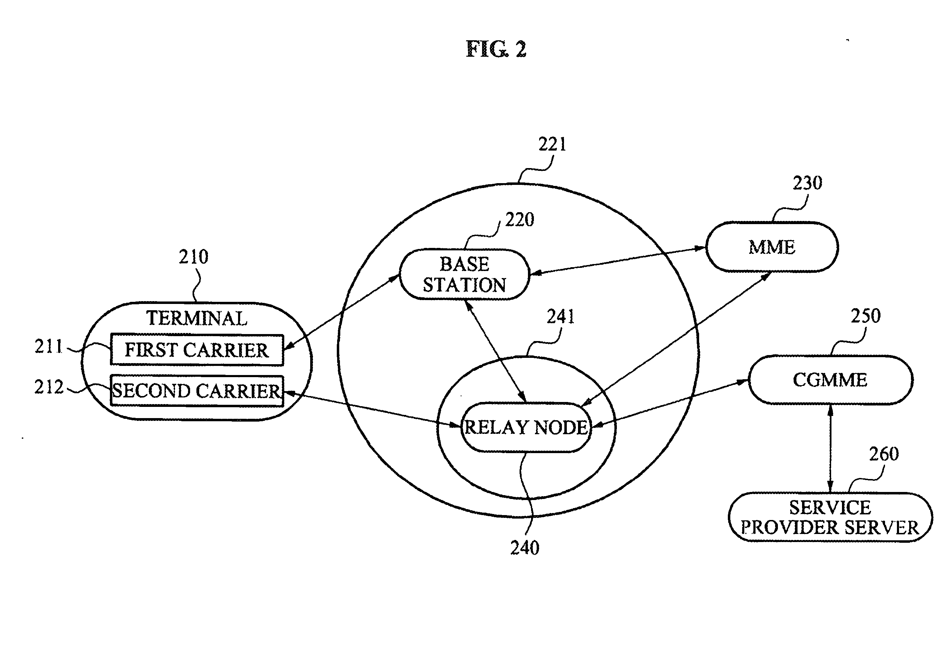

FIG. 2 is a diagram illustrating an example of a system for providing a service using a relay node 240 according to an embodiment of the present invention.

Referring to FIG, 2, the service providing system may include a terminal 210, a base station 220, a MME 230, the relay node 240, a CGMME 250, and a service provider server 260.

In the service providing system, the relay node 240 may relay an information transmission and reception between the terminal 210 and the base station 220, and may access the CGMME 250 to provide the terminal 210 with a service that is optimized with respect to a particular area 241. The optimized service may be transmitted from the service provider server 260.

For example, when the particular area 241 is a building such as with a company, a department store, and a supermarket, the optimized service may include a broadcasting service for staff, a service of providing product information, price information and location information that are uniquely utilized in the department store or the supermarket, additional information according to a location of the terminal 210, and the like.

When the terminal 210 is located in an overlapping location between a donor cell 221 that is an area of the base station 220 and the particular area 241, the terminal 210 may select and access any one of the base station 210 providing a communication service and the relay node 240 providing the optimized service according to a manipulation of a user. When the terminal 210 is located in the particular area 241 excluded from the donor cell 221, the terminal 210 may access the relay node 240 to receive the optimized service, or may access the base station 220 via the relay node 240 to receive a communication service transmitted from the base station 220 via the relay node 240 according to the manipulation of the user.

The terminal 210 may include a carrier aggregation function including a first carrier 211 and a second carrier 212, and may access the base station 220 using the first carrier 211 and access the relay node 240 using the second carrier 212.

For example, the terminal 210 may access the base station 210 using the first carrier 211 to receive the communication service, and may access the relay node 240 using the second carrier 212 to receive the optimized service.

When the terminal 210 receives system information from the relay node 240, the terminal 210 may verify the received system information to detect that the terminal enters a coverage of the relay node 240, and may display, for the user, information associated with the coverage of the relay node 240 entered by the terminal 210, information associated with a service available from the CGMME 250, and a message of verifying whether to register the available service. When the service registration request is received from the user as a response to the message, the terminal 210 may transmit the service registration request to the relay node 240. The terminal 210 may set up a channel, for example, a multicast channel and a broadcast channel based on a type of the available service.

The base station 220 may transmit and receive information to and from the MME 230 performing the communication service, and the terminal 210 that is included in the donor cell 221, and may provide the performed communication service to the terminal 210.

The relay node 240 may manage an information transmission and reception between the terminal 210 and the base station 220 in the particular area 241 to thereby relay the information transmission and reception between the terminal 210 and the base station 220, and may also access the CGMME 250 to provide the terminal 210 with the optimized service that is transmitted from the service provider server 260. As described above, the optimized service is optimized with respect to the particular area 241.

For example, the relay node 240 may include a layer 1 (L1) protocol and a layer 2 (L2) protocol to manage the information transmission and reception between the terminal 210 and the base station 220, and a layer 3 (L3) protocol to connect a control signal of a user transmitted from the terminal 210 to another server without using the base station 220.

When an unregistered terminal enters the particular area 241, the relay node 240 may transmit system information to the unregistered terminal to report that the unregistered terminal enters the particular area 241. When a service registration request is received from the unregistered terminal, the relay node 240 may transmit the service registration request and location information of the unregistered terminal to the CGMME 250. When the CGMME 250 completes a radio connection setup according to the service registration request, the relay node 240 may relay an information transmission between the unregistered terminal and the CGMME 250 to provide the unregistered terminal with the optimized service transmitted from the CGMME 250.

The relay node 240 may determine, as the unregistered terminal, a terminal of which context, information is not included in the CGMME 250,

In an embodiment where the terminal 210 accesses the base station 220 using the first carrier 211 to receive the communication service and accesses the relay node 240 using the second carrier 212 to receive the optimized service, when the CGMME 250 completes a radio connection setup according to the service registration request, the relay node 240 may perform a handover to receive the communication service from the base station 220, and may provide the received communication service using the second carrier 212 and thereby unifying targets to communicate with the terminal 210.

The CGMME 250 may manage information associated with the particular area 241, access the service provider server 260 of providing the optimized service based on information associated with the particular area 241, and may manage an information transmission and reception between the relay node 240 and the service provider server 260, The CGMME 250 may manage a mobility of a closed group in the particular area 241.

Information associated with the particular area 241 may include location information of the particular area 24 and context information registered to the available service.

When the CGMME 250 receives the service registration request and location information of the terminal 210 from the relay node 240, the CGMME 250 may set up a connection with the service provider server 260 corresponding to the service registration request based on location information of the terminal 210, and transmit the service registration request to the service provider server 260. When the service provider server 260 completes a higher setup of the radio connection according to the service registration request and transmits a response signal to the CGMME in response to the service registration request, the CGMME. 250 receiving the response signal may transmit the received response signal to the terminal 210 via the relay node 240 and thereby complete the radio connection setup.

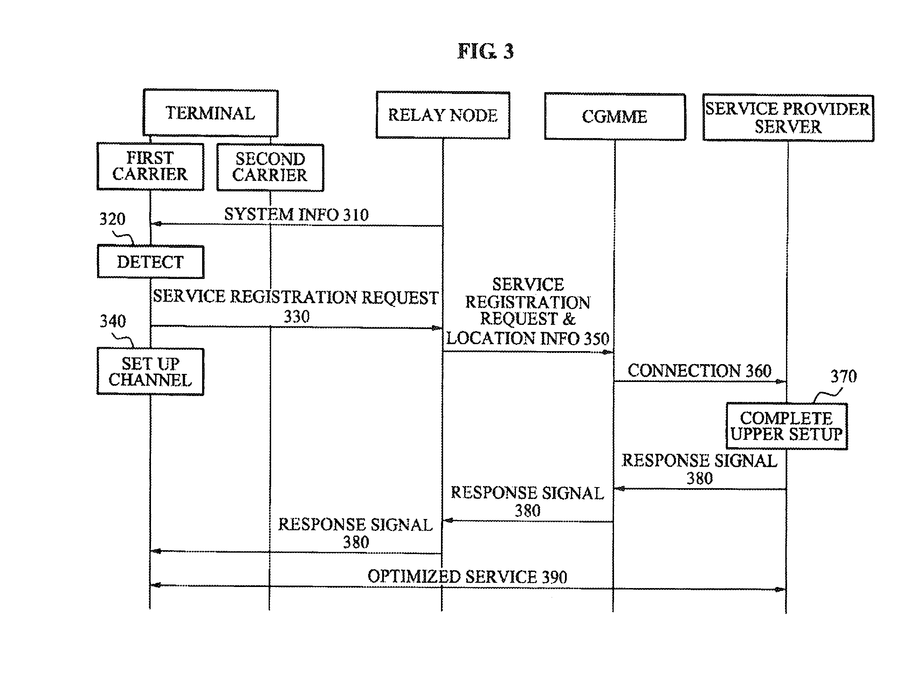

FIG. 3 is a flowchart illustrating a method of providing a service using a relay node according to an embodiment of the present invention.

In operation 310, a relay node may transmit system information to an unregistered terminal (hereinafter, referred to as a terminal) entering a particular area.

Specifically, when the relay node detects an entrance of a new terminal into the particular area, the relay node may verify whether context information associated with the new terminal exists. When the context information does not exist, the relay node may transmit system information to the new terminal entering the particular area.

In operation 320, the terminal may verify the received system information to detect that the terminal enters into a coverage of the relay node, and may display, for a user, information associated with the coverage of the relay node entered by the terminal, information associated with a service available from a CGMME, and a message of verifying whether to register the available service.

In operation 330, the terminal may receive a service registration request from the user as a response to the message, and transmit the service registration request to the relay node.

In operation 340, the terminal may set up a channel, for example, a multicast channel and a broadcast channel according to the service registration request. Specifically, the terminal may set up the channel, for example, the multicast channel and the broadcast channel based on a type of a service selected by the user from available services.

In operation 350, the relay node may transmit the service registration request and location information of the terminal to the CGMME.

In operation 360, the CGMME may set up a connection with a service provider server corresponding to the service registration request based on location information of the terminal, and may transmit, the service registration request to the service provider server.

In operation 370, the service provider server may complete an upper or higher setup of a radio connection according to the service registration request.

In operation 380, the service provider server may transmit, to the CGMME, a response signal containing the completed higher setup, and the CGMME may transmit the response signal to the terminal 210 via the relay node to thereby complete the radio connection setup.

In operation 390, the service provider server may provide the terminal with a service optimized with respect to the particular area according to the completed radio connection.

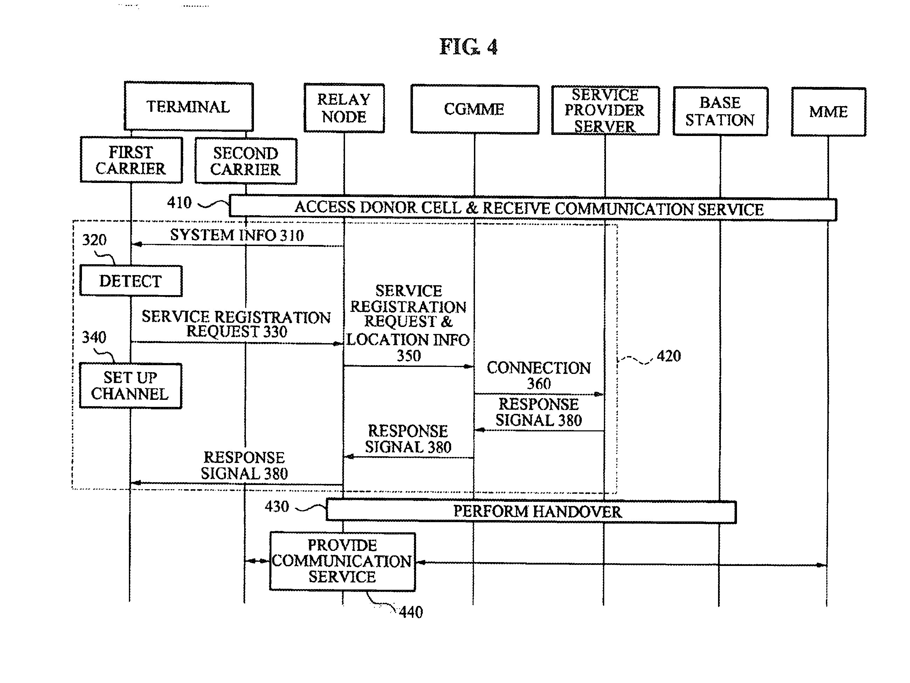

FIG. 4 is a flowchart illustrating a method of performing a handover of a communication service according to an embodiment of the present invention.

In operation 410, a terminal may access, using a second carrier, a base station 220 included in a donor cell where the terminal is located, to receive a communication service from a MME.

In operation 420, the terminal entering a coverage of the relay node may register a service using the relay node and complete a radio connection setup with a service provider server using a first carrier. Detailed process of operation 420 will be the same as operations 310 through 380 of FIG. 3 and thus further description will be omitted here.

In operation 430, the relay node may perform a handover of a channel utilized to receive the communication in operation 410, from the base station to the relay node.

In operation 440, the relay node may connect the handed over channel to the second carrier, and may provide the second carrier with the communication service that provided from the MME via the base station. Through this, it is possible to unify targets to communicate with the terminal.

According to examples useful to understand the invention, a service providing system using a relay node may enable the relay node to operate as a base station by adding an L3 protocol to the relay node.

Also, according to other example, it is possible to enable a relay node to connect a core network and a server of providing a service optimized with respect to a particular location or area, and to thereby provide a user with a separate service available only in an area managed by the relay node.

Also, according to another example, it is possible to perform a handover of a channel used by a base station from the base station to a relay node and to thereby decrease a number of targets connected by a terminal, when the terminal includes a carrier aggregation function and utilizes different services in the base station and the relay node.

Although a few exemplary embodiments of the present invention have been shown and described, the present invention is not limited to the described exemplary embodiments. Instead, it would be appreciated by those skilled in the art that changes may be made to these exemplary embodiments without departing from the principles of the invention, the scope of which is defined by the claims.

## Claims

1. A method of providing a service in a service providing system using a relay node (240), the method comprising:
verifying, by the relay node (240), context information associated with a terminal (210) entering a particular area;
transmifting (310), by the relay node (240), system information to the terminal (210) when context information associated with the terminal (210) does not exist;
transmitting (350), by the relay node (240), a service registration request and location information of the terminal to a Closed Group Mobility Management Entity, CGMME (250), when the relay node (240) receives (330) the service registration request from the terminal (240) as a response to the system information (310); and
relaying, by the relay node (240), an information transmission between the CGMME (250) and the terminal (210) to provide the terminal (210) with a service optimized with respect to the particular area that is performed by the CGMME (250), when the CGMME (250) completes a radio access setup according to the service registration request,
wherein the terminal (210) includes a carrier aggregation function including a plurality of carriers, and
wherein in a case where the terminal (210) accesses a base station (220) using a first carrier to receive a communication service from a Mobility Management Entity, MME (230), and accesses the relay node (240) using a second carrier to receive the service optimized for the particular areal from the CGMME (250), the method further comprises:
performing, by the relay node (240), a handover (430) of a channel used to receive the communication service, from the base station (220) to the relay node (240) and connecting the channel handed over to the second carrier; and
transmitting, by the relay node (240), the received communication service from the MME (230) using the second carrier.

2. The method of claim 1, wherein the providing comprises:
setting up, by the CGMME (250), a connection with a service provider server (260) corresponding to the service registration request based on location information of the terminal (210), when the service registration request and location information of the terminal (210) is received from the relay node (240).
transmitting, by the CGMME (250) the service registration request to the service provider server (260); and
transmitting, by the CGMME (250), a response signal to the terminal (210) via the relay node (240) to complete the radio connection setup when the service provider server (260) completes a setup of a radio connection according to the service registration request and transmits a response signal to the CGMME (250) in response to the service registration request.

3. The method of claim 1 or 2, further comprising:
verifying, by the terminal (210), the received system information to detect that the terminal enters a coverage of the relay node (240);
displaying, by the terminal (210) for the user, information associated with the coverage of the relay node (240) entered by the terminal (210), information associated with a service available from the CGMME (250), and a message of verifying whether to register the available service in order to utilize the available service;
receiving, by the terminal (210), the service registration request from the user as a response to the message; and
transmitting, by the terminal (210), the service registration request to the relay node (240).

4. A system for providing a service using a relay node (240), comprising:
the relay node (240), a terminal (210), a Closed Group Mobility Management Entity, MME (230), and a service provider server (260), wherein the relay node (240) is adapted to verify context information associated with a terminal (210) entering a particular area, transmit system information to the terminal (210) when context information associated with the terminal (210) does not exist, transmit a service registration request and location information of the terminal to the CGMME, when the relay node (240) receives the service registration request from the terminal (210) as a response to the system information, and relay an information transmission between the CGMME (250) and the terminal (210) to provide the terminal with a service optimized with respect to the particular area that is performed by the CGMME (250), when the CGMME (250) completes a radio access setup according to the service registration request,
the terminal (210) includes a carrier aggregation function including a plurality of carriers, and
in a case where the terminal (210) accesses the base station (220) using a first carrier to receive a communication service from the Mobility Management Entity, MME (230), and accesses the relay node (240) using a second carrier to receive the optimized service for the particular area from the CGMME (250), the relay node (240) is further adapted to perform a handover of a channel used to receive the communication service, from the base station (220) to the relay node (240), connect the channel handed over to the second carrier, and transmit the communication service from the MME (230) using the second carrier.

5. The system of claim 4, wherein:
when the service registration request and location information of the terminal (210) is received from the relay node (240), the CGMME (250) is adapted to set up a connection with the service provider server (260) corresponding to the service registration request based on location information of the terminal (210),
the CGMME (250) is adapted to transmit the service registration request to the service provider server (260), and
when the service provider server (260) completes a setup of a radio connection according to the service registration request and transmits a response signal to the CGMME (250) in response to the service registration request, the CGMME (250) is adapted to transmit the response signal to the terminal (210) via the relay node (240) to complete the radio connection setup.

6. The system of claim 4 or 5, wherein:
the terminal (210) is adapted to verify the received system information to detect that the terminal (210) enters a coverage of the relay node (240),
the terminal (210) is adapted to display, for the user, information associated with the coverage of the relay node (240) entered by the terminal (210), information associated with a service available from the CGMME (250), and a message of verifying whether to register the available service, and
the terminal (210) is adapted to receive the service registration request from the user as a response to the message, and the terminal (210) is adapted to transmit the service registration request to the relay node (240).

## Patentansprüche

1. Verfahren zum Bereitstellen eines Dienstes in einem Dienstbereitstellungssystem mittels eines Relay-Knotens (240), wobei das Verfahren umfasst:
Verifizieren, durch den Relay-Knoten (240), von Kontextinformation, die einem Endgerät (210) zugeordnet ist, welches in einen bestimmten Bereich eintritt;
Übertragen (310), durch den Relay-Knoten (240), von Systeminformation an das Endgerät (210), wenn keine Kontextinformation existiert, welche dem Endgerät (210) zugeordnet ist;
Übertragen (350), durch den Relay-Knoten (240), einer Dienstregistierungsanfrage und Ortsinformation des Endgeräts an eine Closed Group Mobility Management Entity, CGMME (250), wenn der Relay-Knoten (240) die Dienstregistierungsanfrage von dem Endgerät (210) als eine Antwort auf die Systeminformation (310) empfängt (330); und
Weitergeben, durch den Relay-Knoten (240), einer Informationsübertragung zwischen der CGMME (250) und dem Endgerät (210), um das Endgerät (210) mit einem mit Bezug auf den bestimmten Bereich optimierten Dienst zu versorgen, welcher durch die CGMME (250) ausgeführt wird, wenn die CGMME (250) einen Funkverbindungsaufbau in Übereinstimmung mit der Dienstregistrierungsanfrage beendet,
wobei das Endgerät (210) eine Trägeraggregationsfunktion enthält, die eine Mehrzahl von Trägern enthält, und
wobei in einem Fall, in dem das Endgerät (210) auf eine Basisstation (220) mittels eines ersten Trägers zugreift, um einen Kommunikationsdienst von einer Mobility Management Entity, MME (230), zu empfangen, und der Relay-Knoten (240) mittels eines zweiten Trägers zugreift, um den für den bestimmten Bereich optimierten Dienst von der CGMME (250) zu empfangen, das Verfahren ferner umfasst:
Durchführen, durch den Relay-Knoten (240), einer Übergabe (430) eines Kanals, welcher verwendet wird, um den Kommunikationsdienst zu empfangen, von der Basisstation (220) an den Relay-Knoten (240) und Verbinden des übergebenen Kanals mit dem zweiten Träger; und
Übertragen, durch den Relay-Knoten (240), des Kommunikationsdienstes von der (230) mittels des zweiten Trägers.

2. Verfahren nach Anspruch 1, wobei das Bereitstellen umfasst:
Aufbauen, durch die CGMME (250), einer Verbindung mit einem Dienstbereitstellungsserver (260), welcher der Dienstregistrierungsanfrage entspricht, basierend auf Ortsinformation des Endgeräts (210), wenn die Dienstegistrierungsanfrage und Ortsinformation des Endgeräts (210) von dem Relay-Knoten (240) empfangen wird,
Übertragen, durch die CGMME (250), der Dienstregistierungsanfrage an den Dienstbereitstellungsserver (260); und
Übertragen, durch die CGMME (250), eines Antwortsignals über den Relay-Knoten (240) an das Endgerät (210), um den Funkverbindungsaufbau zu beenden, wenn der Dienstbereitstellungsserver (260) einen Aufbau einer Funkverbindung in Übereinstimmung mit der Dienstregistrierungsanfrage beendet und ein Antwortsignal an die CGMME (250) als Antwort auf die Dienstregistrierungsanfrage überträgt.

3. Verfahren nach Anspruch 1 oder 2, ferner umfassend:
Verifizieren, durch das Endgerät (210), der empfangenen Systeminformation, um zu erfassen, dass das Endgerät in einen Versorgungsbereich des Relay-Knotens (240) eintritt;
Anzeigen, durch das Endgerät (210) für den Nutzer, von Information, welches dem Versorgungsbereich des Relay-Knotens (240) zugeordnet ist, in welches das Endgerät (210) eingetreten ist, Information, welche einem Dienst zugeordnet ist, der von der CGMME (250) verfügbar ist, und einer Nachricht zum Verifizieren, ob der verfügbare Dienst zu registrieren ist, um den verfügbaren Dienst zu benutzen; und
Empfangen, durch das Endgerät (210), der Dienstregistrierungsanfrage von dem Nutzer als eine Antwort auf die Nachricht; und
Übertragen, durch das Endgerät (210), der Dienstregistrierungsanfrage an den Relay-Knoten (240).

4. System zum Bereitstellen eines Dienstes mittels eines Relay-Knotens (240), umfassend:
den Relay-Knoten (240), ein Endgerät (210), eine Closed Group Mobility Management Entity, CGMME (250), eine Basisstation (220), eine Mobility Management Entity, MME (230), und einen Dienstbereitstellungsserver (260),
wobei der Relay-Knoten (240) dazu ausgelegt ist, Kontextinformation zu verifizieren, welche einem Endgerät (210) zugeordnet ist, das in einen bestimmten Bereich eintritt, Systeminformation an das Endgerät (210) zu übertragen, wenn keine Kontextinformation existiert, die dem Endgerät (210) zugeordnet ist, eine Dienstregistrierungsanfrage und Ortsinformation des Endgeräts an die CGMME zu übertragen, wenn der Relay-Knoten (240) die Dienstregistrierungsanfrage von dem Endgerät (210) als eine Antwort auf die Systeminformation empfängt, und eine Informationsübertragung zwischen der CGMME (250) und dem Endgerät (210) weiterzugeben, um das Endgerät (210) mit einem mit Bezug auf den bestimmten Bereich optimierten Dienst zu versorgen, welcher durch die CGMME (250) ausgeführt wird, wenn die CGMME (250) einen Funkverbindungsaufbau in Übereinstimmung mit der Dienstregistrierungsanfrage beendet,
wobei das Endgerät (210) eine Trägeraggregationsfunktion enthält, die eine Mehrzahl von Trägern enthält, und
wobei in einem Fall, in dem das Endgerät (210) auf die Basisstation (220) mittels eines ersten Trägers zugreift, um einen Kommunikationsdienst von der Mobility Management Entity, MME (230), zu empfangen, und der Relay-Knoten (240) mittels eines zweiten Trägers zugreift, um den für den bestimmten Bereich optimierten Dienst von der CGMME (250) zu empfangen, der Relay-Knoten (240) ferner dazu ausgelegt ist, eine Übergabe (430) eines Kanals, welcher verwendet wird, um den Kommunikationsdienst zu empfangen, von der Basisstation (220) an den Relay-Knoten (240) durchzuführen, den übergebenen Kanal mit dem zweiten Träger zu verbinden und den Kommunikationsdienst von der MME (230) mittels des zweiten Trägers zu übertragen.

5. System nach Anspruch 4, wobei:
wenn die Dienstregistrierungsanfrage und Ortsinformation des Endgeräts (210) von dem Relay-Knoten (240) empfangen ist, die CGMME (250) dazu ausgelegt ist, eine Verbindung mit dem Dienstbereitstellungsserver (260), welcher der Dienstregistrierungsanfrage entspricht, basierend auf Ortsinformation des Endgeräts (210) aufzubauen,
die CGMME (250) dazu ausgelegt ist, die Dienstregistrierungsanfrage an den Dienstbereitstellungsserver (260) zu übertragen, und
wenn der Dienstbereitstellungsserver (260) einen Aufbau einer Funkverbindung in Übereinstimmung mit der Dienstregistrierungsanfrage beendet und ein Antwortsignal an die CGMME (250) als Antwort auf die Dienstregistrierungsanfrage überträgt, die CGMME (250) dazu ausgelegt ist, das Antwortsignal über den Relay-Knoten (240) an das Endgerät (210) zu übertragen, um den Funkverbindungsaufbau zu beenden.

6. System nach Anspruch 4 oder 5, wobei:
das Endgerät (210) dazu ausgelegt ist, die empfangene Systeminformation zu verifizieren, um zu erfassen, dass das Endgerät (210) in einen Versorgungsbereich des Relay-Knotens (240) eintritt,
das Endgerät (210) dazu ausgelegt ist, Information, welches dem Versorgungsbereich des Relay-Knotens (240) zugeordnet ist, in welchen das Endgerät (210) eintritt, Information, welche einem Dienst zugeordnet ist, der von der CGMME (250) verfügbar ist, und eine Nachricht zum Verifizieren, ob der verfügbare Dienst zu registrieren ist, für den Nutzer anzuzeigen, und
das Endgerät (210) dazu ausgelegt ist, die Dienstregistrierungsanfrage von dem Nutzer als eine Antwort auf die Nachricht zu empfangen; und das Endgerät (210) dazu ausgelegt ist, die Dienstregistrierungsanfrage an den Relay-Knoten (240) zu übertragen.

## Revendications

1. Procédé de fourniture d'un service dans un système de fourniture de service utilisant un noeud relais (240), le procédé comprenant :
la vérification, par le noeud relais (240) d'une information de contexte associée à un terminal (210) entrant dans une zone particulière ;
la transmission (310), par le noeud relais (240), d'une information de système au terminal (210) lorsqu'une information de contexte associée au terminal (210) n'existe pas ;
la transmission (350), par le noeud relais (240), d'une demande d'enregistrement de service et d'informations d'emplacement de terminal à une entité de gestion de mobilité de groupe fermé, CGMME (250), lorsque le noeud relais (240) reçoit (330) la demande d'enregistrement de service depuis le terminal (210) en réponse à l'information de système (310) ; et
le relais, par le noeud relais (240), d'une transmission d'informations entre la CGMME (250) et le terminal (210) pour fournir au terminal (210) un service optimisé par rapport à la zone particulière qui est réalisé par la CGMME (250), lorsque la CGMME (250) exécute un établissement d'accès radio selon la demande d'enregistrement de service,
dans lequel le terminal (210) comprend une fonction d'agrégation de porteuse comprenant une pluralité de porteuses, et
dans lequel dans un cas où le terminal (210) accède à une station de base (220) en utilisant une première porteuse pour recevoir un service de communication depuis une entité de gestion de mobilité MME (230), et accède au noeud relais (240) en utilisant une seconde porteuse pour recevoir le service optimisé par la zone particulière de la CGMME (250), le procédé comprend en outre :
la réalisation, par le noeud relais (240), d'un transfert (430) d'un canal utilisé pour recevoir le service de communication, depuis la station de base (220) au noeud relais (240) et la connexion du canal transféré à la seconde porteuse ; et
la transmission, par le noeud relais (240), du service de communication depuis la MME (230) en utilisant la seconde porteuse.

2. Procédé selon la revendication 1, dans lequel la fourniture comprend :
l'établissement, par la CGMME (250), d'une connexion avec un serveur fournisseur de services (260) correspondant à la demande d'enregistrement de service sur la base d'une information d'emplacement du terminal (210), lorsque la demande d'enregistrement de service et les informations d'emplacement du terminal (210) sont reçues par le noeud relais (240) ;
la transmission, par la CGMME (250), de la demande d'enregistrement de service au serveur fournisseur de services (260) ; et
la transmission, par la CGMME (250), d'un signal de réponse au terminal (210) via le noeud relais (240) pour exécuter l'établissement d'une connexion radio lorsque le serveur fournisseur de services (260) exécute un établissement de connexion radio selon la demande d'enregistrement de service et transmet un signal de réponse à la CGMME (250) en réponse à la demande d'enregistrement de service.

3. Procédé selon la revendication 1 ou 2, comprenant en outre :
la vérification, par le terminal (210), de l'information de système reçue pour détecter que le terminal entre dans une couverture du noeud relais (240) ;
l'affichage, par le terminal (210) pour l'utilisateur, d'une information associée à la couverture du noeud relais (240) dans lequel entre le terminal (210), d'une information associée à un service disponible auprès de la CGMME (250), et d'un message de vérification permettant de savoir s'il faut enregistrer le service disponible afin d'utiliser le service disponible ;
la réception, par le terminal (210), de la demande d'enregistrement de service par l'utilisateur en réponse au message ; et
la transmission, par le terminal (210), de la demande d'enregistrement de service au noeud relais (240).

4. Système de fourniture de service utilisant un noeud relais (240), comprenant :
le noeud relais (240), un terminal (210), une entité de gestion de mobilité de groupe fermé CGMME (250), une station de base (220), une entité de gestion de mobilité, MME (230), et un serveur fournisseur de services (260) ;
dans lequel le noeud relais (240) est adapté pour vérifier une information de contexte associée à un terminal (210) entrant dans une zone particulière, transmettre une information de système au terminal (210) lorsqu'une information de contexte associée au terminal (210) n'existe pas, transmettre une demande d'enregistrement de service et une information d'emplacement du terminal à la CGMME, lorsque le noeud relais (240) reçoit la demande d'enregistrement de service depuis le terminal (210) en réponse à l'information de système, et relayer une transmission d'informations entre la CGMME (250) et le terminal (210) pour fournir au terminal un service optimisé par rapport à la zone particulière qui est réalisé par la CGMME (250), lorsque la CGMME (250) exécute un établissement d'accès radio selon la demande d'enregistrement de service,
le terminal (210) comprend une fonction d'agrégation de porteuse comprenant une pluralité de porteuses, et
dans un cas où le terminal (210) accède à la station de base (220) en utilisant une première porteuse pour recevoir un service de communication de l'entité de gestion de mobilité, MME (230), et accède au noeud relais (240) en utilisant une seconde porteuse pour recevoir le service optimisé pour la zone particulière depuis la CGMME (250), le noeud relais (240) est en outre adapté pour réaliser un transfert d'un canal utilisé pour recevoir le service de communication, depuis la station de base (220) au noeud relais (240), connecter le canal transféré sur la seconde porteuse, et transmettre le service de communication depuis la MME (230) en utilisant la seconde porteuse.

5. Système selon la revendication 4, dans lequel :
lorsque la demande d'enregistrement de service et l'information d'emplacement du terminal (210) sont reçues depuis le noeud relais (240), la CGMME (250) est adaptée pour établir une connexion avec le serveur fournisseur de services (260) correspondant à la demande d'enregistrement de service sur la base de l'information d'emplacement du terminal (210),
la CGMME (250) est adaptée pour transmettre la demande d'enregistrement de service au serveur fournisseur de services (260), et
lorsque le serveur fournisseur de services (260) exécute un établissement d'une connexion radio selon la demande d'enregistrement de service et transmet un signal de réponse à la CGMME (250) en réponse à la demande d'enregistrement de service, la CGMME (250) est adaptée pour transmettre le signal de réponse au terminal (210) via le noeud relais (240) pour exécuter l'établissement de connexion radio.

6. Système selon la revendication 4 ou 5, dans lequel :
le terminal (210) est adapté pour vérifier l'information de système reçue pour détecter que le terminal (210) entre dans une couverture du noeud relais (240),
le terminal (210) est adapté pour afficher, pour l'utilisateur, une information associée à la couverture du noeud relais (240) dans lequel entre le terminal (210), une information associée à un service disponible auprès de la CGMME (250), et un message de vérification permettant de savoir s'il faut enregistrer le service disponible, et
le terminal (210) est adapté pour recevoir la demande d'enregistrement de service depuis l'utilisateur en réponse au message ; et le terminal (210) est adapté pour transmettre la demande d'enregistrement de service au noeud relais (240).
